# FASCICULE DE BREVET EUROPEEN

(11) **EP 3 164 318 B1**
(45) Date de publication et mention de la délivrance du brevet: **23.05.2018**
(21) Numéro de dépôt: 15745521.3
(22) Date de dépôt: 19.06.2015
(51) Int. Cl.: B62D 21/15

(54) **TRAVERSE TRANSVERSALE DE RENFORT AMÉLIORÉE**
VERBESSERTE TRANSVERSALE VERSTÄRKUNGSSTREBE
IMPROVED TRANSVERSE REINFORCING BRACE

(30) Priorité: 04.07.2014 FR 1456485
(43) Date de publication de la demande: 10.05.2017
(73) Titulaire: PSA Automobiles SA, 78300 Poissy (FR)
(72) Inventeur: TUAL, Catherine, 92190 Meudon (FR); MENAND, Marine, 78220 Viroflay (FR); JOURDAN, Dominique, 27700 Heuqueville (FR)
(86) Numéro de dépôt international: PCT/FR2015/051641
(87) Numéro de publication internationale: WO 2016/001511

(56) Documents cités:
- EP-A1- 0 799 757
- EP-A1- 1 762 465
- EP-A1- 1 806 270
- WO-A1-2013/182524
- DE-A1-102008 019 167
- DE-A1-102009 015 355
- DE-A1-102010 048 863
- FR-A1- 2 960 506
- JP-A- 2006 312 351
- US-A- 5 127 704

## Description

L'invention concerne une traverse de plancher de véhicule destinée à renforcer le plancher en cas de choc latéral.

La structure de la carrosserie d'un véhicule est conçue pour absorber un maximum d'énergie lors d'un impact. Dans le cas d'un impact latéral, l'habitacle doit rester relativement préservé pour protéger ses occupants. Généralement, afin de résister à un choc latéral, les véhicules automobiles comportent au moins une traverse transversale de renfort située sur le plancher du véhicule, du côté de l'habitacle. Cette traverse s'étend d'un côté latéral du véhicule à l'autre côté latéral, sensiblement perpendiculairement à l'axe longitudinal du véhicule. Pour répondre au durcissement des protocoles de test en choc latéral, la tendance actuelle consiste à renforcer cette traverse de renfort située contre le plancher du véhicule.

Par exemple, le brevet EP0799757 décrit une traverse de renfort de plancher pour le choc latéral, s'étendant entre chaque côté du véhicule. Ladite traverse de renfort a une section en forme de « U », les extrémités des branches du « U » étant fixées sur la surface du plancher. La traverse est disposée sur la face du plancher orientée du côté de l'habitacle du véhicule. Pour récupérer les efforts en cas de choc latéral, la traverse est directement fixée aux longerons latéraux du véhicule. Le plancher du véhicule forme un tunnel s'étendant tout le long du plancher suivant l'axe longitudinal du véhicule, dans l'axe médian dudit véhicule. Ce tunnel crée une partie surélevée du plancher côté habitacle. Au niveau dudit tunnel, la hauteur des branches du U de la section de la traverse de renfort est diminuée afin de suivre le dénivelé du tunnel.

Cette solution permet de créer une structure améliorant la résistance au choc latéral du véhicule. Cependant, une telle structure de renfort d'un plancher de véhicule augmente la masse du véhicule. De plus, elle crée une zone surélevée sur le plancher du véhicule, côté habitacle, qui peut gêner en particulier des passagers arrière en diminuant la place disponible pour placer leurs pieds sur le plancher. La demande publiée EP-A1-1806270 décrit une traverse de renfort de plancher, avec un embout fixé à chacune de ses extrémités, embout lui-même relié à son extrémité libre à un élément structurel latéral du véhicule. Ce document divulgue également le préambule de la revendication 1. La présente invention a donc pour objectif d'alléger le véhicule sans diminuer sa résistance au choc, en particulier au choc latéral. Plus particulièrement, elle a pour but de créer une traverse transversale de renfort pour le choc latéral qui soit à la fois légère et suffisamment résistante pour offrir une bonne protection en cas de choc latéral. Elle a aussi pour objectif d'améliorer le confort des passagers, et plus particulièrement d'améliorer l'espace pour les jambes des passagers dans l'habitacle du véhicule, malgré le renforcement du plancher pour les chocs latéraux.

Ce but est atteint selon l'invention grâce à une traverse pour un plancher de véhicule, destinée à s'étendre entre les deux côté latéraux du véhicule, caractérisée en ce que ladite traverse comporte un corps en matériau composite et des embouts déformables fixés au moins à deux extrémités dudit corps, lesdits embouts étant agencés pour relier lesdites extrémités du corps à des éléments de la structure latérale du véhicule, tels que les longerons.

L'utilisation d'un matériau composite permet de réaliser un corps de traverse plus léger qu'une traverse en acier, tout en étant rigide.

Les matériaux composites pouvant avoir de faibles capacités de déformation, en particulier en flexion ou torsion lorsqu'ils sont soumis en même temps à un effort de compression, les embouts déformables placés aux extrémités du corps et destinés à relier la traverse à la structure latérale du véhicule, permettent avantageusement de ne faire passer essentiellement que les efforts de compression dans le corps, les autres efforts comme par exemple les efforts de flexion liés à la rotation des éléments de structure latérale du véhicule sur lesquelles la traverse est reliée, étant absorbés par la déformation desdits embouts. Les risques que le corps en matériau composite ne se brise sont ainsi diminués. Ainsi avantageusement, la traverse est légère, résistante, et permet des déformations au niveau de ses liaisons avec les éléments de structure du véhicule.

Par exemple, dans le cas d'une structure de véhicule comportant des longerons latéraux, lors d'un choc latéral sur un des côtés du véhicule, le longeron impacté peut pivoter sur lui-même suivant l'axe longitudinal du véhicule. Si chaque embout est fixé sur chaque longeron latéral du véhicule, la traverse étant placée suivant l'axe transversal du véhicule, la rotation du longeron impacté crée des efforts de cisaillement qui vont déformer les embouts. Cette déformation des embouts limite les efforts liés à ladite rotation du longeron qui sont transmis au corps. Le corps reçoit ainsi essentiellement des efforts de compression dans le sens transversal du véhicule et peu d'effort dans des directions autres. La traverse résiste ainsi mieux aux efforts d'un choc latéral.

Un autre avantage est que les embouts permettent d'absorber une partie des efforts du choc dans la direction transversale du véhicule. Ainsi, en cas de choc latéral, une partie de l'énergie du choc est dissipée dans la déformation desdits embouts. Les efforts transmis au corps sont diminués.

Les extrémités de la traverse peuvent se diviser en plusieurs branches destinées à être fixées aux éléments de la structure du véhicule. Par exemple, les embouts peuvent avoir une forme de Y, dont la partie inférieure du Y formant une partie verticale est reliée à l'extrémité du corps, et les deux branches supérieures sont reliées à des éléments de la structure latérale du véhicule.

Suivant un mode de réalisation préféré de l'invention, les embouts sont en matériau métallique.

Avantageusement, le métal permet d'avoir une bonne résistance mécanique et de bonnes capacités à se déformer sans se briser. Les embouts peuvent être fixés par collage, par rivetage, ou tout autre moyen de fixation connu par l'homme du métier. Les embouts peuvent être en acier pour une mise en forme plus facile ou pour un coût faible, ou encore en aluminium pour en réduire la masse.

Suivant un autre mode de réalisation de l'invention, les embouts comportent des zones de rupture programmée de manière à permettre une déformation programmée desdits embouts.

Ainsi avantageusement, la déformation de l'embout est mieux contrôler. Plusieurs zones de rupture programmées peuvent être appliquées. Par exemple, des surfaces de la traverse transversale peuvent avoir une forme de type « accordéon » afin de permettre une déformation contrôlée de l'embout.

Suivant un autre mode de réalisation de l'invention, la section du corps est en forme de « U » et les extrémités des branches du « U » de la section de la traverse sont agencées pour être fixées au moins contre la surface d'un plancher de véhicule.

Cette forme a l'avantage de permettre de créer un corps creux fermé, la forme en « U » de la section de la traverse étant refermé par le plancher sur lequel la traverse est fixée. La traverse et le plancher coopèrent ainsi pour améliorer la résistance de la structure du véhicule à un choc latéral. L'extrémité des branches du « U » de la section de la traverse peuvent former des bords tombés agencés pour créer une surface de fixation pour fixer ladite traverse contre la surface du plancher de véhicule.

Suivant un autre mode de réalisation de l'invention dans laquelle la traverse est destinée à être installée sur un plancher de véhicule comportant un tunnel suivant l'axe médian longitudinal du véhicule, un segment du milieu du corps présente une forme courbe en oméga « Ω » conformée pour suivre la forme dudit tunnel du plancher du véhicule.

Avantageusement, la traverse peut ainsi renforcer le tunnel du plancher. En effet, en cas de choc latéral sur un véhicule comportant un plancher avec un tunnel central, le tunnel crée une zone fragile qui va rapidement se déformer, et entraîner une déformation de l'ensemble du plancher. La largeur de l'habitacle va diminuer. En donnant à une partie de la traverse cette forme en « Ω » qui suit la forme du tunnel, la traverse renforce la résistance du plancher au niveau du tunnel en cas de choc latéral, et retarde sa déformation, tout en conservant un espace dans le tunnel pour le passage d'éléments technique du véhicule, comme par exemple un tuyau d'échappement, des canalisations ou un arbre de transmission. Un autre avantage est que cette forme en « Ω » crée une zone moins résistante que le reste de la traverse, du fait de la courbure. Ainsi, en cas de choc latéral, si les efforts sont trop importants, la partie centrale de la traverse comportant cette forme en « Ω » va se rompre ou se déformer avant les parties de la traverse situées autour de ladite zone centrale en « Ω » et qui forment des bras latéraux de la traverse. Lorsque la traverse est fixée à un plancher de véhicule comportant un tunnel, chacun des bras latéraux de la traverse est généralement situé sensiblement au niveau de la zone du plancher sur laquelle est placé un des sièges avant. La fragilité créée par la forme en « Ω » permet d'éviter à l'un des bras de casser ou de se déformer, et donc d'éviter de réduire la zone du plancher sur laquelle un siège est fixé. Une fois que le corps s'est rompu ou s'est déformé au niveau de la forme en « Ω », les bras vont continuer à renforcer les parties du plancher auxquelles ils sont fixés. La sécurité des passagers est améliorée.

Suivant un autre mode de réalisation de l'invention, le corps comporte une partie principale s'étendant suivant une première direction principale de la traverse, et au moins une extension s'étendant dans une deuxième direction d'extension différente de la direction principale de la traverse, la direction principale étant parallèle à l'axe transversale du véhicule lorsque la traverse est fixée sur le plancher d'un véhicule.

Ainsi, lorsque la traverse est fixée sur un plancher de véhicule, la partie principale du corps permet de renforcer le plancher en cas de choc latéral, et l'extension permet de renforcer le plancher autour de ladite traverse vis-à-vis des efforts perpendiculaires au plancher en répartissant lesdits efforts sur une plus grande surface en cas de choc frontal. En effet, en cas de choc frontal, les fixations arrière des sièges avant vont transmettre des efforts sur le plancher. Ces efforts ont une composante perpendiculaire au plancher importante, qui a tendant à tirer sur ledit plancher et provenant du pivotement des sièges suivant un axe de rotation parallèle à l'axe transversal du véhicule. En positionnant la traverse sur le plancher du véhicule de manière à ce que la partie principale soit à proximité ou approximativement en vis-à-vis avec les fixations arrière des sièges avant, en se plaçant dans le référentiel du véhicule, et s'étendant suivant l'axe transversal du véhicule pour être reliée au moins par deux extrémités opposées à des éléments de structures latérales du véhicule, comme par exemple des longerons, et de manière à ce que l'extension de la traverse soit orientée vers l'arrière du véhicule, le plancher résiste mieux à ces efforts de tirages grâce à la coopération avec ladite traverse qui répartit ces efforts de tirage sur une plus grande surface du plancher.

Dans le cas où le corps ne comporte qu'une seule extension et où un segment du milieu dudit corps suit une forme courbe en « Ω », ladite extension est positionnée de manière préférentielle au moins en partie au niveau de la forme courbe en « Ω ». Ainsi, l'extension du corps permet d'augmenter l'inertie de la partie centrale de la traverse en forme de « Ω », et donc de permettre à ladite traverse de passer plus d'effort au niveau du tunnel du plancher. L'extension permet de renforcer cette partie centrale en forme de « Ω ». Dans ce cas, de manière préférentielle, la largeur de l'extension, c'est-à-dire la dimension de l'extension dans une direction parallèle à une la direction principale de la traverse, est plus grande que la longueur du segment du corps la forme en « Ω », c'est-à-dire sa dimension suivant la même direction principale.

L'invention porte aussi sur un plancher de véhicule comportant une traverse telle que décrite précédemment.

Suivant un autre mode de réalisation de l'invention, le plancher est en matériau composite.

L'invention porte aussi sur un véhicule comportant un plancher tel que décrit précédemment et dans lequel la traverse est disposée sur la face du plancher située côté extérieur du véhicule.

Avantageusement, cette disposition permet de ne pas empiéter sur le volume de l'habitacle du véhicule en évitant de créer des volumes sur le plancher du véhicule côté habitacle. Le confort des passagers n'est ainsi pas dégradé.

Suivant un autre mode de réalisation de l'invention, le véhicule comporte un plancher tel que décrit précédemment et sur lequel est reliée une planche à talon, la traverse comportant une extension s'étendant jusqu'à la liaison du plancher avec la planche à talon.

Ainsi, avantageusement, en cas de choc avant, cette disposition permet de transférer les efforts de tirage issus des fixations arrière des sièges avant sur le plancher vers la planche à talon. Les risques de déformation, voire d'arrachement du plancher sont diminués. La sécurité des passagers est améliorée.

L'invention porte aussi sur un procédé de fabrication d'un véhicule comportant un plancher tel que décrit précédemment, le procédé ayant au moins les étapes suivantes :
- fixation du corps de la traverse sur plancher
- fixation du plancher entre les structures latérales du véhicule, notamment entre les longerons
- fixation des embouts au moins sur le corps de la traverse et un élément de la structure latérale

De préférence, le procédé de fabrication suivra les étapes dans cet ordre : fixation du corps sur le plancher, pose et fixation du plancher sur des rebords des longerons destinés à recevoir ledit plancher, les rebords des longerons étant orientés vers le toit du véhicule de manière à ce que le plancher soit posé sur lesdits longerons, puis montage des embouts entre le corps et lesdits longerons. Les embouts peuvent en complément être fixés au plancher.

Ainsi, avantageusement, le montage du plancher et de la traverse sur la structure du véhicule est simplifié.

L'invention sera mieux comprise à la lecture de la description qui va suivre, donnée uniquement à titre d'exemple et faite en se référant aux dessins annexés, sur lesquels :
- La fig. 1 est une vue en perspective du corps d'une traverse suivant un mode de réalisation de l'invention, sans les embouts.
- La fig. 2 est du dessous d'un plancher de véhicule avec une traverse comportant un corps tel que décrit en fig.1 et des embouts.
- La fig. 3 est une vue d'une extrémité du corps équipé d'un embout suivant un mode de réalisation particulier de l'invention.
- La fig. 4 est une vue du dessous d'un plancher de véhicule comportant une traverse dont le corps possède une extension dirigée vers l'arrière du plancher du véhicule, dans la zone centrale dudit corps.

Les dessins sont des représentations schématiques pour faciliter la compréhension de l'invention. Les composants ne sont pas forcément représentés à l'échelle. Les mêmes références correspondent aux mêmes composants d'une figure à l'autre.

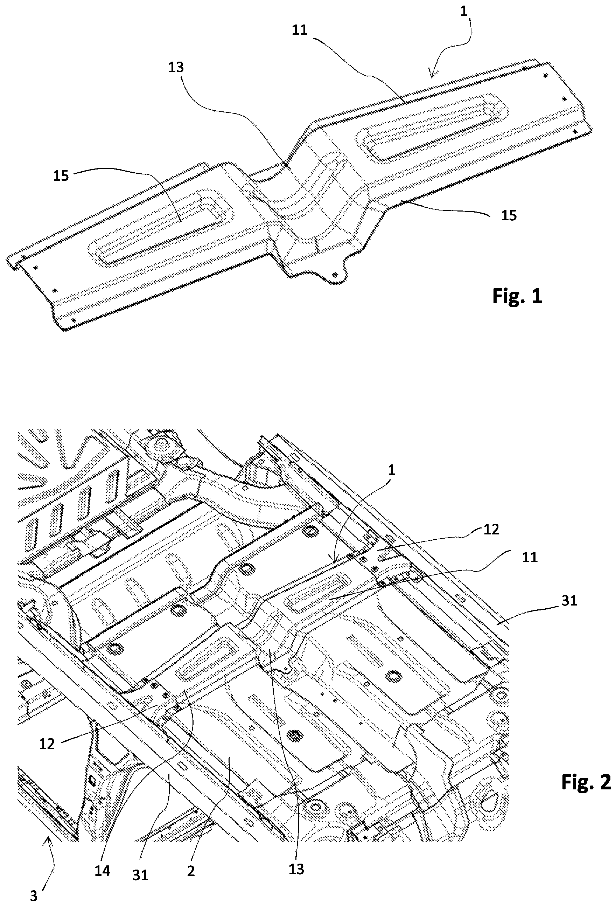

La fig. 1 montre un corps 11 d'une traverse 1 de renfort de plancher de véhicule, destinée à être placée sur la face côté extérieur d'un plancher de véhicule qui comporte un tunnel central. Le tunnel central s'étend dans une direction longitudinale. Le corps 11 a une section transversale sensiblement en forme de « U », et comporte une zone centrale courbe 13, formant un « Ω », le long d'un segment sensiblement au niveau du milieu de la longueur dudit corps 11, la longueur dudit corps 11 étant sa dimension suivant la direction donnée par ces deux extrémités, destinée à suivre la forme du tunnel du plancher formant une partie bombée côté habitacle du véhicule. Les extrémités de la forme de la section en « U » du corps 11 comporte des bords tombés formant des surfaces agencées pour être plaquées contre le plancher et destinées à recevoir des moyens de fixation au plancher. Le corps est de préférence en matériau composite, par exemple dans un matériau appelé composite SMC qui est un semi-produit thermodur constitué de nappe de fils coupés ou continus imprégnés par un mélange de résine polyester, de charges et d'adjuvants divers. Il est fixé par collage au plancher. D'autres moyens de fixation peuvent être utilisés, comme par exemple une fixation par rivet ou encore, dans le cas d'un plancher en matériau composite, par soudage en faisant fondre la résine du matériau composite du corps 11 et celle du plancher 2, puis en plaquant les deux pièces l'une contre l'autre jusqu'à refroidissement de la matière. D'autres matières peuvent être utilisées pour réaliser le corps 1, comme par exemple de la tôle d'acier ou d'aluminium. Dans le cas d'un plancher 2 plat, c'est-à-dire sans tunnel, le corps 11 est dépourvu de zone courbe 13 formant un « Ω ».

La forme en « U » de la section transversale du corps 11 correspond à une forme comportant deux branches parallèles reliées entre elles par une base. Ladite base de la forme en « U » est de préférence de forme sensiblement plane et comporte par endroit des dépressions 15 qui permettent de rigidifier le corps 11. En variante, la base du « U » de la section du corps 11 peut comporter des ondulations dans le sens de la longueur du corps 11, c'est-à-dire suivant l'axe transversal du véhicule lorsque le corps 11 est monté sur ledit véhicule. D'autres formes peuvent être envisagées.

En variante, la traverse 1 peut être positionnée sur le plancher 2 du côté habitacle du véhicule.

La fig. 2 montre le corps 11 monté sur un plancher 2 de véhicule 3, et le plancher 2 positionné entre les deux longerons 31. La longueur du corps 11 est inférieure à la distance entre les deux longerons 31. Le corps 11 est fixé au plancher 2 avant de monter le plancher 2 sur le véhicule. Puis le plancher 2 est installé sur le véhicule de manière à être supporté par les longerons 31, le corps 1 s'étendant entre les longerons 31. De préférence, la longueur du corps 11 sera choisie de manière à laisser un espace entre chaque extrémité du corps 11 et chaque longeron 31. Un embout 12 est fixé d'un côté à une des extrémités du corps 11 et l'autre à l'un des longerons 31. Le corps 11 et les embouts 12 forment la traverse 1 qui s'étend ainsi entre les deux longerons 31 suivant l'axe transversal du véhicule.

De préférence, la traverse 1 est positionnée de manière à être sensiblement en vis-à-vis avec les pieds milieu de la structure du véhicule 3 de manière à récupérer les efforts en cas de choc latéral. D'autres positions de la traverse 1 suivant l'axe longitudinal du véhicule 3 lorsque le plancher 2 est installé sur un véhicule peuvent être envisagées.

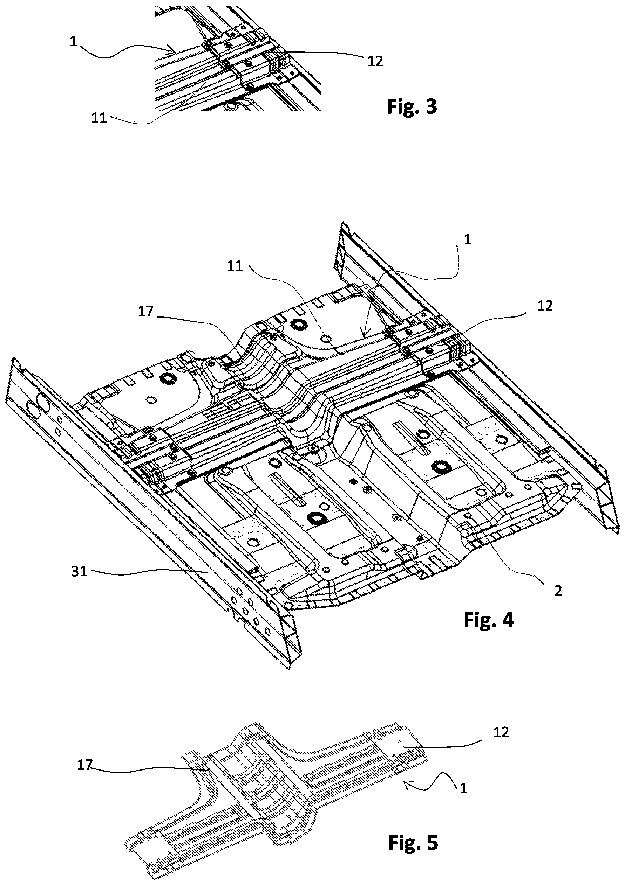

En cas de choc latéral, les efforts subis par le longeron 31 situé du côté du choc sont transmis au corps 11 via les embouts 12. Les embouts 12 sont de préférence agencés de manière à pouvoir se déformer en cas de choc latéral. Ils peuvent être réalisés par exemple en tôle d'acier. Les embouts 12 peuvent avoir des formes comportant des zones de déformation programmées, comme par exemple une forme comportant des bords en accordéon comme illustrés en fig. 3, pour contrôler la déformation des embouts 12. Lorsque le corps 11 est en matériau composite, il possède une bonne résistance aux efforts en compression. Par contre, la résistance dudit corps 11 est mauvaise lorsque, en plus des efforts de compression, des efforts suivant des directions différentes à ces efforts de compression, comme par exemple la flexion ou la torsion, agissent sur ledit corps 11. Ces efforts autres que la compression peuvent venir par exemple de la rotation sur lui-même suivant un axe parallèle à l'axe longitudinal du véhicule du longeron 31 impacté par le choc. En se déformant, les embouts 12 permettent que les efforts qui s'appliquent sur le corps 11 soit essentiellement des efforts de compression, en absorbant les efforts dans des autres directions.

De plus, ces embouts 12 permettent aussi d'absorber une partie du choc, et d'obtenir ainsi une montée plus progressive des efforts sur le corps 11 et de diminuer l'accélération subie par les passagers.

Le plancher 2 de la fig. 2 comporte un tunnel central. Le corps 11, fixé sur la surface extérieure du plancher 2 par rapport au véhicule 3, comporte une zone centrale 13 parcourant une forme de « Ω » de manière à suivre le tunnel central, les deux parties du corps 11 autour de la zone centrale 13 formant des bras 14. Cette forme permet d'améliorer la rigidité du plancher 2 au niveau du tunnel en cas de choc latéral. Elle permet aussi de créer une zone de rupture programmée grâce à cette forme en « Ω » lorsque les efforts deviennent trop importants, et imposer ainsi que le corps 11 se rompe ou se déforme dans la zone centrale 13 et non au niveau de l'un des bras 14.

La direction principale de la traverse 1 est sensiblement parallèle à l'axe transversal du véhicule et est positionnée contre le plancher de sorte que les bras 14 sont sensiblement sous les sièges des passagers avant, de préférence sous les fixations arrière des sièges avant sur le plancher. En cas de choc latéral important, le corps 11 va se rompre dans sa partie centrale au niveau du « Ω », mais les bras 14 vont rester intacts. Les bras 14 vont ainsi permettre d'éviter la diminution de l'espace comportant les sièges et situé au-dessus de chacun desdits bras 14, et donc d'améliorer la protection des passagers assis dans lesdits sièges.

Dans le cas d'un corps ne comportant pas de zone centrale 13 en forme de « Ω », ledit corps peut comporter des moyens de déformation ou de rupture programmée, comme par exemple des diminutions d'épaisseur localisées ou une diminution locale de la section du corps 11. En autre variante, le corps 11 peut suivre une forme en « Ω » sur un segment situé au milieu mais positionné dans un plan sensiblement parallèle au plancher 2 du véhicule lorsque ledit corps 11 est fixé sur le plancher.

En variante, le corps 11 peut être réalisé d'une pièce avec le plancher 2.

La fig. 4 montre un plancher 2 de véhicule équipé d'une traverse 1, dont le corps 11 comporte une extension 17 dans une partie située au niveau du milieu de la longueur du corps 11, et relié à des longerons 31. L'extension 17 s'étend de préférence vers l'arrière du véhicule lorsque la traverse 1 est fixée sur le véhicule. Dans le cas d'un plancher 2 relié à une planche à talon, la planche à talon s'étant une paroi sensiblement verticale à l'intérieur du véhicule et placé sous l'assise du siège arrière du véhicule, l'extension 17 s'étend de préférence au moins jusqu'à la partie du plancher 2 reliée à ladite planche à talon. En cas de choc avant, les fixations arrière des sièges avant génèrent des efforts de traction sur le plancher 2 du véhicule, efforts de traction dirigés vers l'habitacle du véhicule et cherchant à soulever le plancher 2. Ces efforts de traction s'appliquant sur le plancher 2 sont repris par la traverse 1. L'extension 17 permet de transmettre ces efforts issus des sièges vers la planche à talon et d'augmenter ainsi la résistance du plancher 2 vis-à-vis de ces efforts de traction.

De préférence, la largeur de l'extension 17, c'est-à-dire sa dimension suivant l'axe transversal du véhicule lorsque la traverse 1 est installée sur le véhicule 2, est supérieure à la longueur de la zone centrale 13, c'est-à-dire la dimension de la zone centrale 13 suivant l'axe transversal du véhicule lorsque la traverse 11 est installée sur véhicule.

L'extension 17 permet aussi d'augmenter la dimension de la section du corps 11 au niveau de la zone centrale 13. La capacité de la zone centrale 13 a résisté aux efforts en cas de choc latéral est ainsi améliorée.

En variante, la traverse peut comporter plusieurs extensions 17. Par exemple, la traverse 1 peut comporter deux extensions 17 donnant à la traverse une forme en « Π ».

Le corps 11 peut comporter des nervures de renfort dans le volume défini par sa section en « U » de manière à augmenter la rigidité dudit corps 11.

Lors de la fabrication du véhicule, le corps 11 de la traverse 1 est fixé sur le plancher 2. Puis le plancher 2 est fixé aux longerons latéraux 31 de la structure du véhicule. Enfin, chaque embout 12 est positionné entre l'une des extrémités du corps 11 et l'un des longerons 31, fixé au corps 11 et au longeron 31, et ainsi qu'au plancher 2.

En variante, le plancher 2 peut être d'abord fixé aux longerons 31, puis le corps de la traverse est fixé au plancher 2. Enfin, chaque embout 12 est positionné entre l'une des extrémités du corps 11 et l'un des longerons 31, fixé au corps 11 et au longeron 31, et aussi au plancher 2. En autre variante, la traverse 1, c'est-à-dire le corps 11 équipé des embouts 31, peut être fixée au plancher 2 et aux longerons 31 via les embouts 12, après que le plancher 2 ait été fixé aux longerons 31.

## Revendications

1. Traverse (1) pour un plancher de véhicule, destinée à s'étendre entre les deux côté latéraux du véhicule, **caractérisée en ce que** ladite traverse (1) comporte un corps (11) en matériau composite et des embouts (12) déformables fixés au moins à deux extrémités dudit corps (11), lesdits embouts (12) étant agencés pour relier lesdites extrémités du corps (11) à des éléments de la structure latérale du véhicule, tels que les longerons.

2. Traverse (1) suivant la revendication précédente **caractérisée, en ce que** les embouts (12) sont en matériau métallique.

3. Traverse (1) suivant l'une des revendications précédentes, **caractérisée en ce que** les embouts (12) comportent des zones de rupture programmée.

4. Traverse (1) suivant l'une des revendications précédentes, **caractérisée en ce que** la section du corps (11) est en forme de « U » et les extrémités des branches du « U » de la section de la traverse (1) sont agencées pour être fixées au moins contre la surface d'un plancher de véhicule.

5. Traverse (1) suivant l'une des revendications précédentes, destinée à être installée sur un plancher de véhicule comportant un tunnel suivant l'axe médian longitudinal du véhicule, **caractérisée en ce qu'**un segment du milieu du corps (11) présente une forme courbe en oméga « Ω » conformée pour suivre la forme dudit tunnel du plancher du véhicule.

6. Traverse (1) suivant l'une des revendications précédentes, **caractérisée en ce que** le corps (11) comporte une partie principale s'étendant suivant une première direction principale de la traverse (1), et au moins une extension (17) s'étendant dans une deuxième direction d'extension différente de la direction principale de la traverse (1), la direction principale étant parallèle à l'axe transversale du véhicule lorsque la traverse est fixée sur le plancher d'un véhicule.

7. Plancher (2) de véhicule comportant une traverse (1) suivant au moins l'une des revendications précédentes.

8. Plancher (2) suivant la revendication 7 **caractérisé en ce que** ledit plancher (2) est en matériau composite.

9. Véhicule comportant un plancher (2) sur lequel est reliée une planche à talon, **caractérisé en ce qu'**il comporte une traverse (1) suivant la revendication 6 et dont l'extension s'étend jusqu'à la liaison du plancher avec la planche à talon.

10. Procédé de fabrication d'un véhicule comportant un plancher (2) suivant l'une des revendications de 8 ou 9, comportant au moins les étapes
- fixation du corps (11) de la traverse (1) sur plancher (2)
- fixation du plancher (2) entre les structures latérales du véhicule, notamment entre les longerons
- fixation des embouts (12) au moins sur le corps (11) de la traverse (1) et un élément de la structure latérale

## Patentansprüche

1. Transversale Strebe (1) für einen Fahrzeugboden, die dazu bestimmt ist, sich zwischen den zwei seitlichen Seiten des Fahrzeugs zu erstrecken, **dadurch gekennzeichnet, dass** die transversale Strebe (1) einen Körper (11) aus einem Verbundmaterial und verformbare Ansätze (12) umfasst, die mindestens an zwei Enden des Körpers (11) befestigt sind, wobei die Ansätze (12) eingerichtet sind, um die Enden des Körpers (11) mit Elementen der seitlichen Struktur des Fahrzeugs, wie den Längsträgern, zu verbinden.

2. Transversale Strebe (1) nach dem vorhergehenden Anspruch, **dadurch gekennzeichnet, dass** die Ansätze (12) aus metallischem Material bestehen.

3. Transversale Strebe (1) nach einem der vorhergehenden Ansprüche, **dadurch gekennzeichnet, dass** die Ansätze (12) programmierte Bruchzonen umfassen.

4. Transversale Strebe (1) nach einem der vorhergehenden Ansprüche, **dadurch gekennzeichnet, dass** der Schnitt des Körpers (11) in "U"-Form ist und dass die Enden der Schenkel des "U" des Schnitts der transversalen Strebe (1) eingerichtet sind, um mindestens gegen die Oberfläche eines Fahrzeugbodens befestigt zu sein.

5. Transversale Strebe (1) nach einem der vorhergehenden Ansprüche, **dadurch gekennzeichnet, dass** sie auf dem Fahrzeugboden installiert ist, der einen Tunnel entlang der mittleren Längsachse des Fahrzeugs umfasst, **dadurch gekennzeichnet, dass** ein Segment der Mitte des Körpers (11) eine Krümmung in Omega-Form "Ω" aufweist, die ausgestaltet ist, um der Form des Tunnels des Bodens des Fahrzeugs zu folgen.

6. Transversale Strebe (1) nach einem der vorhergehenden Ansprüche, **dadurch gekennzeichnet, dass** der Körper (11) einen Hauptteil umfasst, der sich entlang einer ersten Hauptrichtung der transversalen Strebe (1) erstreckt, und mindestens eine Erweiterung (17), die sich in eine zweite Erweiterungsrichtung erstreckt, die von der Hauptrichtung der transversalen Strebe (1) unterschiedlich ist, wobei die Hauptrichtung zu der transversalen Achse des Fahrzeugs parallel ist, wenn die transversale Strebe auf dem Boden eines Fahrzeugs befestigt ist.

7. Boden (2) eines Fahrzeugs, der eine transversale Strebe (1) gemäß mindestens einem der vorhergehenden Ansprüche umfasst.

8. Boden (2) nach Anspruch 7, **dadurch gekennzeichnet, dass** der Boden (2) aus Verbundmaterial besteht.

9. Fahrzeug, das einen Boden (2) umfasst, auf dem eine Planke mit Absatz verbunden ist, **dadurch gekennzeichnet, dass** es eine transversale Strebe (1) nach Anspruch 6 umfasst, und deren Erweiterung sich bis zu der Verbindung des Bodens mit der Planke mit Absatz erstreckt.

10. Verfahren zum Herstellen eines Fahrzeugs, das einen Boden (2) nach einem der Ansprüche 8 oder 9 umfasst, das mindestens die Schritte des
- Befestigens des Körpers (11) der transversalen Strebe (1) auf dem Boden (2),
- Befestigens des Bodens (2) zwischen den seitlichen Strukturen des Fahrzeugs, insbesondere zwischen den Längsträgern,
- Befestigens der Ansätze (12) mindestens auf dem Körper (11) der transversalen Strebe (1) und einem Element der seitlichen Struktur umfasst.

## Claims

1. A transverse brace (1) for a vehicle floor, intended to extend between the two lateral sides of the vehicle, **characterized in that** said transverse brace (1) comprises a body (11) made of composite material, and deformable end pieces (12) fixed at least to two ends of said body (11), said end pieces (12) being arranged to connect said ends of the body (11) to elements of the lateral structure of the vehicle, such as the side rails.

2. The transverse brace (1) according to the preceding claim, **characterized in that** the end pieces (12) are made of metallic material.

3. The transverse brace (1) according to one of the preceding claims, **characterized in that** the end pieces (12) comprise predetermined breaking zones.

4. The transverse brace (1) according to one of the preceding claims, **characterized in that** the section of the body (11) is U-shaped and the ends of the branches of the U of the section of the transverse brace (1) are arranged so as to be fixed at least against the surface of a vehicle floor.

5. The transverse brace (1) according to one of the preceding claims, intended to be installed on a vehicle floor comprising a tunnel along the median longitudinal axis of the vehicle, **characterized in that** a segment of the middle of the body (11) has a curved omega shape **Ω,** shaped to follow the form of said tunnel of the floor of the vehicle.

6. The transverse brace (1) according to one of the preceding claims, **characterized in that** the body (11) comprises a main part extending along a first main direction of the transverse brace (1), and at least one extension (17) extending in a second extension direction, different from the main direction of the transverse brace (1), the main direction being parallel to the transverse axis of the vehicle when the transverse brace is fixed on the floor of a vehicle.

7. A vehicle floor (2) comprising a transverse brace (1) according to at least one of the preceding claims.

8. The floor (2) according to Claim 7, **characterized in that** said floor (2) is made of composite material.

9. A vehicle comprising a floor (2) on which a heel board is connected, **characterized in that** it comprises a transverse brace (1) according to Claim 6 and the extension of which extends up to the connection of the floor with the heel board.

10. A method for manufacture of a vehicle comprising a floor (2) according to one of Claims 8 or 9, comprising at least the steps:
- fixing of the body (11) of the transverse brace (1) on floor (2)
- fixing of the floor (2) between the lateral structures of the vehicle, in particular between the side rails,
- fixing of the end pieces (12) at least on the body (11) of the transverse brace (1) and an element of the lateral structure.
